# EUROPEAN PATENT APPLICATION

(11) **EP 3 062 238 A1**
(43) Date of publication of application: **31.08.2016**
(21) Application number: 16157656.6
(22) Date of filing: 26.02.2016
(51) Int. Cl.: G06F 17/27, G06F 17/28

(54) **SUMMARIZATION BY SENTENCE EXTRACTION AND TRANSLATION OF SUMMARIES CONTAINING NAMED ENTITIES**

(30) Priority: 27.02.2015 KR 20150028604
(71) Applicant: Samsung Electronics Co., Ltd., Gyeonggi-do 16677 (KR)
(72) Inventor: LEE, Jimin, Gyeonggi-do (KR); KIM, Kyungtae, Gyeonggi-do (KR); KANG, Sangki, Gyeonggi-do (KR)
(74) Representative: Jenkins, Richard Gavin

(57) **Abstract**

An apparatus and a method of processing text are disclosed. The method includes: summarizing the text by extracting at least one sentence from the text; identifying attributes of analysis units included in the sentence of the summarized text; and translating the summarized text based on the identified attributes.

## Description

### FIELD

The present disclosure relates to an apparatus and a method for processing text, for example, a method and apparatus which can accurately translate text.

### BACKGROUND

An electronic device may support various functions to provide various services to a user. At this time, the electronic device may support a text summarizing function and a text translating function. The text summarizing function corresponds to a function of reducing an amount of text while maintaining a subject of the text. Further, the text translating function corresponds to a function of replacing a language of the text with another language. That is, the electronic device may summarize input text, translate the summarized text, and then output the translated text.

However, the electronic device may extract some of the sentences of the input text according to the text summarizing function. Accordingly, a correlation between the extracted sentences may be unclear and a meaning of each of the extracted sentences may be obscured. Therefore, when the electronic device translates the extracted sentences according to the text translating function, various types of errors may occur and thus the translation may have low accuracy.

### SUMMARY

In accordance with an aspect of the present disclosure, a method of processing text is provided. The method includes: summarizing text by extracting at least one sentence from the text; identifying attributes of analysis units included in the sentence of the summarized text; and translating the summarized text based on the identified attributes.

In accordance with another aspect of the present disclosure, an apparatus for processing text is provided. The apparatus includes: a summarization processing unit configured to summarize text by extracting at least one sentence from the text; an intermediate processing unit configured to identify attributes of analysis units in the sentence of the summarized text; and a translation processing unit configured to translate the summarized text based on the identified attributes.

An apparatus and a method for processing text according to various example embodiments of the present disclosure may process text according to attributes of analysis units in text and then translate the text. Accordingly, the apparatus for processing the text can accurately translate the text. Further, the apparatus for processing the text can accurately translate the text even though the text is summarized.

### BRIEF DESCRIPTION OF THE DRAWINGS

The above and other aspects, features, and advantages of the present disclosure will be more apparent from the following detailed description, taken in conjunction with the accompanying drawings, in which like reference numerals refer to like elements, and wherein:
FIG. 1 is a block diagram illustrating an example network environment including an electronic device;
FIG. 2 is a block diagram illustrating an example electronic device;
FIG. 3 is a block diagram illustrating an example program module;
FIG. 4 is a block diagram illustrating an example electronic device according to an example first embodiment;
FIG. 5 is a flowchart illustrating an example method of processing text according to the first example embodiment;
FIG. 6 is a flowchart illustrating an example of the text summarizing process of FIG. 5;
FIG. 7 is a flowchart illustrating another example of the text summarizing process of FIG. 5;
FIGS. 8A and 8B are flowcharts illustrating an example of the text processing process of FIG. 5;
FIGS. 9A and 9B are flowcharts illustrating another example of the text processing process of FIG. 5;
FIG. 10 is a flowchart illustrating another example of the text processing process of FIG. 5;
FIG. 11 is a flowchart illustrating an example of text translating process of FIG. 5;
FIG. 12 is a block diagram illustrating a network environment including an electronic device according to a second example embodiment;
FIG. 13 is a flowchart in the form of a sequence diagram illustrating an example method of processing text according to the second example embodiment;
FIG. 14 is a block diagram illustrating an example network environment including an example electronic device according to a third example embodiment;
FIG. 15 is a flowchart in the form of a sequence diagram illustrating an example method of processing text according to the third example embodiment;
FIG. 16 is a block diagram illustrating an example network environment including an example electronic device according to a fourth example embodiment; and
FIG. 17 is a flowchart in the form of a sequence diagram illustrating an example method of processing text according to the fourth example embodiment.

### DETAILED DESCRIPTION

Hereinafter, various example embodiments will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various example embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposed between them. It may also be understood that when an element (e.g., first element) is referred to as being "directly connected," or "directly coupled" to another element (second element), there is no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may refer, for example, to a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular example embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even if the term is defined in the present disclosure, it should not be interpreted to exclude example embodiments of the present disclosure.

According to various example embodiments of the present disclosure , for example, the electronic device may include at least one of a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch), or the like.

According to some example embodiments, the electronic device may, for example, be a smart home appliance. The smart home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame, or the like.

According to another example embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.), or the like.

According to some example embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter), or the like. In various example embodiments, the electronic device may be a combination of one or more of the aforementioned various devices. The electronic device according to some example embodiments of the present disclosure may be a flexible device. Further, the electronic device according to an example embodiment of the present disclosure is not limited to the aforementioned devices, and may include a new electronic device according to the development of technology.

Hereinafter, an electronic device according to various example embodiments will be described with reference to the accompanying drawings. As used herein, the term "user" may indicate a person who uses an electronic device or a device (e.g., an artificial intelligence electronic device) that uses an electronic device.

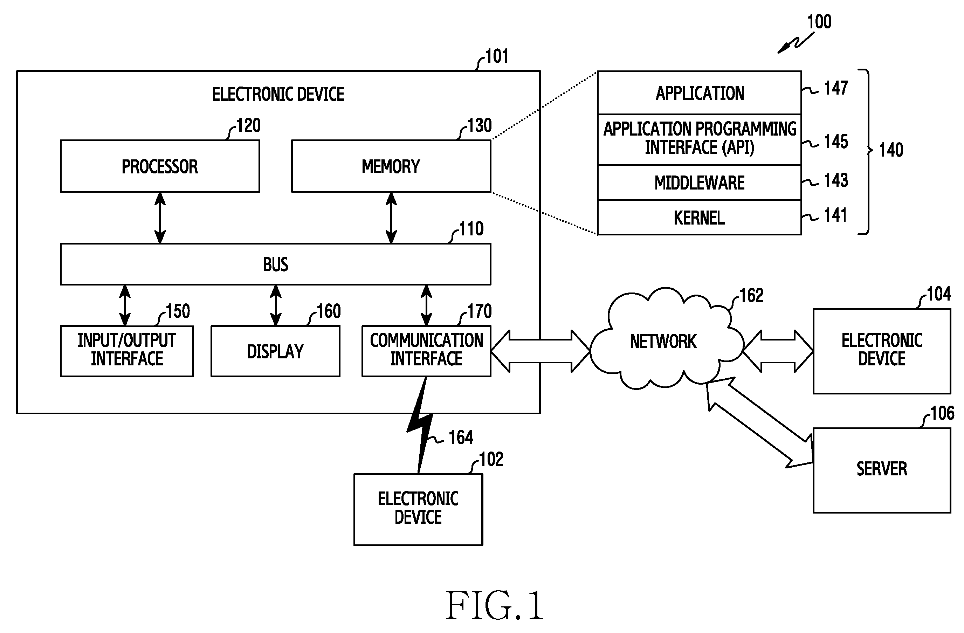

FIG. 1 illustrates an example network environment including an example electronic device.

An electronic device 101 within a network environment 100, according to various example embodiments, will be described with reference to FIG. 1. The electronic device 101 may include, for example, a bus 110, a processor (e.g., including processing circuitry) 120, a memory 130, an input/output interface (e.g., including input/output circuitry) 150, a display (e.g., including a display panel and display driving circuitry) 160, and a communication interface (e.g., including communication circuitry) 170. In some example embodiments, the electronic device 101 may omit at least one of the above elements or may further include other elements.

The bus 110 may include, for example, a circuit for connecting the elements 110 to 170 and transferring communication (for example, control messages and/or data) between the elements.

The processor 120 may include one or more of a Central Processing Unit (CPU), an Application Processor (AP), and a Communication Processor (CP). The processor 120, for example, may carry out operations or data processing relating to control and/or communication of one or more other elements of the electronic device 101. The processor may include various processing circuitry and may include one or more cores.

The memory 130 may include, for example, a volatile memory and/or a non-volatile memory. The memory 130 may store, for example, instructions or data relevant to at least one other element of the electronic device 101. According to an example embodiment, the memory 130 may store software and/or a program 140. The program 140 may include, for example, a kernel 141, middleware 143, an Application Programming Interface (API) 145, and/or application programs (or "applications") 147. At least some of the kernel 141, the middleware 143, and the API 145 may be referred to as an Operating System (OS).

The kernel 141 may, for example, control or manage system resources (for example, the bus 110, the processor 120, or the memory 130) used for performing an operation or function implemented by the other programs (for example, the middleware 143, the API 145, or the application programs 147). Furthermore, the kernel 141 may provide an interface through which the middleware 143, the API 145, or the application programs 147 may access the individual elements of the electronic device 101 to control or manage the system resources.

The middleware 143, for example, may function as an intermediary for allowing the API 145 or the application programs 147 to communicate with the kernel 141 to exchange data.

In addition, the middleware 143 may process one or more task requests received from the application programs 147 according to priorities thereof. For example, the middleware 143 may assign priorities for using the system resources (for example, the bus 110, the processor 120, the memory 130, or the like) of the electronic device 101, to at least one of the application programs 147. For example, the middleware 143 may perform scheduling or load balancing on the one or more task requests by processing the one or more task requests according to the priorities assigned thereto.

The API 145 is an interface through which the applications 147 control functions provided from the kernel 141 or the middleware 143, and may include, for example, at least one interface or function (for example, instruction) for file control, window control, image processing, or text control.

The input/output interface 150 may function as, for example, an interface that may transfer instructions or data input, for example, from a user or another external device to the other element(s) of the electronic device 101. Furthermore, the input/output interface 150 may output the instructions or data received from the other element(s) of the electronic device 101 to the user or another external device.

The display 160 may include, for example, a Liquid Crystal Display (LCD), a Light-Emitting Diode (LED) display, an Organic Light-Emitting Diode (OLED) display, a MicroElectroMechanical Systems (MEMS) display, and an electronic paper display, or the like. The display 160 may display, for example, various types of contents (for example, text, images, videos, icons, or symbols) for the user. The display 160 may include, for example, a touch screen and receive, for example, a touch, gesture, proximity, or hovering input using an electronic pen or the user's body part.

The communication interface 170 may be configured to perform communication between, for example, the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106).

The wireless communication may use at least one of, for example, Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), and Global System for Mobile Communications (GSM), or the like, as a cellular communication protocol. In addition, the wireless communication may include, for example, short-range communication 164. The short-range communication 164 may include at least one of, for example, Wi-Fi, Bluetooth, Near Field Communication (NFC), and Global Positioning System (GPS), or the like. The wired communication may include at least one of, for example, a Universal Serial Bus (USB), a High Definition Multimedia Interface (HDMI), Recommended Standard 232 (RS-232), and a Plain Old Telephone Service (POTS), or the like. The network 162 may include at least one of a communication network, for example, a computer network (for example, a LAN or a WAN), the Internet, and a telephone network, or the like.

Each of the first and second external electronic devices 102 and 104 may be a device which is the same or similar to, or different from, the electronic device 101. According to an example embodiment, the server 106 may include a group of one or more servers. According to various example embodiments, all or some of the operations performed in the electronic device 101 may be performed in another electronic device or a plurality of electronic devices (for example, the electronic devices 102 and104 or the server 106). According to an example embodiment, when the electronic device 101 has to perform some functions or services automatically or in response to a request, the electronic device 101 may make a request for performing at least some functions relating thereto to another device (for example, the electronic device 102 or 104 or the server 106) instead of performing the functions or services by itself or in addition. Another electronic device (for example, the electronic device 102 or 104, or the server 106) may execute the requested functions or the additional functions, and may deliver a result of the execution to the electronic device 101. The electronic device 101 may process the received result as it is or additionally to provide the requested functions or services. To achieve this, for example, cloud computing, distributed computing, or client-server computing technology may be used.

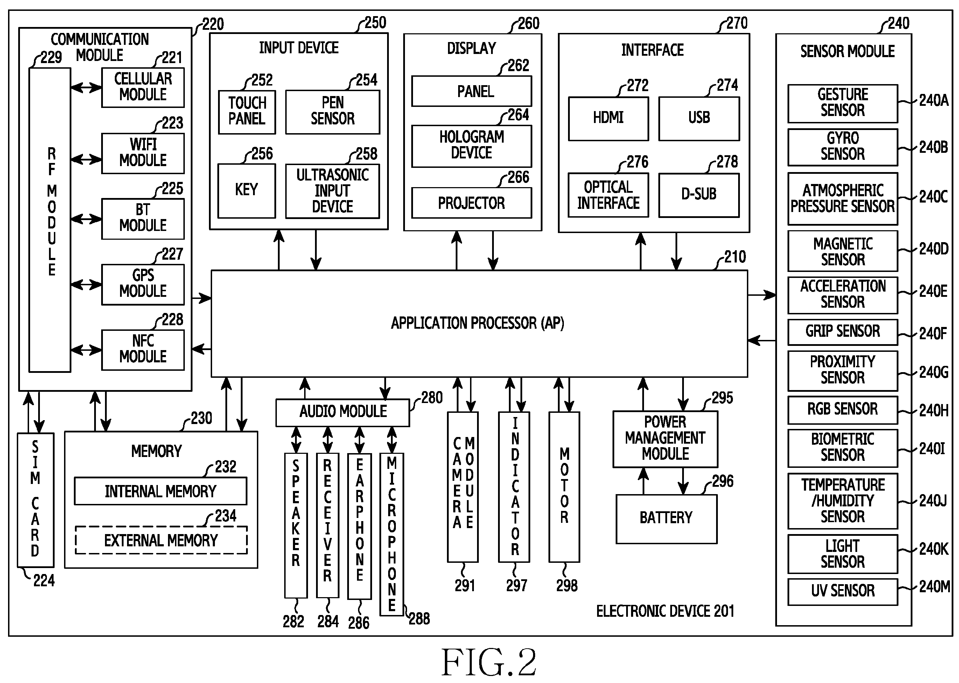

FIG. 2 is a block diagram of an example electronic device 201. The electronic device 201 may include, for example, all or part of the electronic device 101 illustrated in FIG. 1.

Referring to FIG. 2, the electronic device 201 may include at least one Application Processor (AP) (e.g., including processing circuitry) 210, a communication module (e.g., including communication circuitry) 220, a Subscriber Identification Module (SIM) card 224, a memory 230, a sensor module (e.g., including at least one sensor comprising sensor circuitry) 240, an input device (e.g., including input circuitry) 250, a display (e.g., including display circuitry) 260, an interface (e.g., including interface circuitry) 270, an audio module 280, a camera module 291, a power management module 295, a battery 296, an indicator 297, and a motor 298.

The processor 210 may be configured to control a plurality of hardware or software components connected to the processor 210 by driving an operating system or an application program and perform processing of various pieces of data and calculations. The processor 210 may be implemented by, for example, a System on Chip (SoC). According to an example embodiment, the processor 210 may further include a Graphic Processing Unit (GPU) and/or an image signal processor. The processor 210 may include at least some (for example, a cellular module 221) of the elements illustrated in FIG. 2. The processor 210 may be configured to load, into a volatile memory, instructions or data received from at least one (for example, a non-volatile memory) of the other elements and may be configured to process the loaded instructions or data, and may be configured to store various data in a non-volatile memory.

The communication module 220 may have a configuration the same or similar to that of the communication interface 170 of FIG. 1. The communication module 220 may include, for example, a cellular module (e.g., including cellular communication circuitry) 221, a Wi-Fi module 223, a Bluetooth (BT) module 225, a GPS module 227, an NFC module 228, and a Radio Frequency (RF) module 229.

The cellular module 221 may, for example, provide a voice call, an image call, a text message service, or an Internet service through, for example, a communication network. According to an example embodiment, the cellular module 221 may identify and authenticate the electronic device 201 within a communication network using a subscriber identification module (for example, the SIM card 224). According to an example embodiment, the cellular module 221 may perform at least some of the functions that the processor 210 may provide. According to an example embodiment, the cellular module 221 may include a Communication Processor (CP).

For example, each of the Wi-Fi module 223, the BT module 225, the GPS module 227, and the NFC module 228 may include a processor configured to process data transmitted/received through the corresponding module. According to some example embodiments, at least some (two or more) of the cellular module 221, the Wi-Fi module 223, the BT module 225, the GPS module 227, and the NFC module 228 may be included in one Integrated Chip (IC) or IC package.

The RF module 229 may transmit/receive, for example, a communication signal (for example, an RF signal). The RF module 229 may include, for example, a transceiver, a Power Amp Module (PAM), a frequency filter, a Low Noise Amplifier (LNA), or an antenna. According to another example embodiment, at least one of the cellular module 221, the Wi-Fi module 223, the BT module 225, the GPS module 227, and the NFC module 228 may transmit/receive an RF signal through a separate RF module.

The subscriber identification module 224 may include, for example, a card including a subscriber identity module and/or an embedded SIM, and may contain unique identification information (for example, an Integrated Circuit Card Identifier (ICCID)) or subscriber information (for example, an International Mobile Subscriber Identity (IMSI)).

The memory 230 (for example, the memory 130) may include, for example, an internal memory 232 or an external memory 234. The internal memory 232 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disk drive, a Solid State Drive (SSD), and the like).

The external memory 234 may further include a flash drive, for example, a Compact Flash (CF), a Secure Digital (SD), a Micro Secure Digital (Micro-SD), a Mini Secure Digital (Mini-SD), an eXtreme Digital (xD), a MultiMediaCard (MMC), a memory stick, or the like. The external memory 234 may be functionally and/or physically connected to the electronic device 201 through various interfaces.

The sensor module 240 may measure a physical quantity or detect an operation state of the electronic device 201, and may convert the measured or detected information into an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a red, green, blue (RGB) sensor), a biometric sensor 240I, a temperature/humidity sensor 240J, a light sensor 240K, and a ultraviolet (UV) sensor 240M. Additionally, or alternatively, the sensor module 240 may include, for example, an E-nose sensor, an electromyography (EMG) sensor, an electroencephalogram (EEG) sensor, an electrocardiogram (ECG) sensor, an Infrared (IR) sensor, an iris sensor, and/or a fingerprint sensor, or the like. The sensor module 240 may further include a control circuit for controlling one or more sensors included therein. In some example embodiments, the electronic device 201 may further include a processor configured to control the sensor module 240 as a part of or separately from the processor 210, and may be configured to control the sensor module 240 while the processor 210 is in a sleep state.

The input device 250 may include, for example, a touch panel 252, a (digital) pen sensor 254, a key 256, or an ultrasonic input device 258. The touch panel 252 may use at least one of, for example, a capacitive type, a resistive type, an infrared type, and an ultrasonic type. Also, the touch panel 252 may further include a control circuit. The touch panel 252 may further include a tactile layer and provide a tactile reaction to the user.

The (digital) pen sensor 254 may include, for example, a recognition sheet which is a part of the touch panel or is separated from the touch panel. The key 256 may include, for example, a physical button, a virtual button, an optical key or a keypad. The ultrasonic input device 258 may detect ultrasonic waves generated by an input tool through a microphone (for example, a microphone 288) and identify data corresponding to the detected ultrasonic waves.

The display 260 (for example, the display 160) may include a panel 262, a hologram device 264 and/or a projector 266. The panel 262 may include a configuration identical or similar to that of the display 160 illustrated in FIG. 1. The panel 262 may be implemented to be, for example, flexible, transparent, or wearable. The panel 262 and the touch panel 252 may be implemented as one module. The hologram 264 may show a three dimensional image in the air by using an interference of light. The projector 266 may display an image by projecting light onto a screen. The screen may be located, for example, inside or outside the electronic device 201. According to an example embodiment, the display 260 may further include a control circuit for controlling the panel 262, the hologram device 264, or the projector 266.

The interface 270 may include, for example, a High-Definition Multimedia Interface (HDMI) 272, a Universal Serial Bus (USB) 274, an optical interface 276, or a D-subminiature (D-sub) 278. The interface 270 may be included in, for example, the communication interface 170 illustrated in FIG. 1. Additionally, or alternatively, the interface 270 may include, for example, a Mobile High-definition Link (MHL) interface, a Secure Digital (SD) card/MultiMedia Card (MMC) interface, or an Infrared Data Association (IrDA) standard interface, or the like.

The audio module 280 may bilaterally convert, for example, a sound and an electrical signal. At least some elements of the audio module 280 may be included in, for example, the input/output interface 145 illustrated in FIG. 1. The audio module 280 may process sound information which is input or output through, for example, a speaker 282, a receiver 284, earphones 286, the microphone 288 or the like.

The camera module 291 may, for example, refer to a device which may photograph a still image and a dynamic image. According to an example embodiment, the camera module 291 may include one or more image sensors (for example, a front sensor or a back sensor), a lens, an Image Signal Processor (ISP) or a flash (for example, LED or xenon lamp).

The power management module 295 may manage, for example, power of the electronic device 201. According to an example embodiment, the power management module 295 may include a Power Management Integrated Circuit (PMIC), a charger Integrated Circuit (IC), or a battery or fuel gauge. The PMIC may use a wired and/or wireless charging method. The wireless charging method may include, for example, a magnetic resonance method, a magnetic induction method, an electromagnetic method, and the like. Additional circuits (for example, a coil loop, a resonance circuit, a rectifier, and the like) for wireless charging may be further included. The battery gauge may measure, for example, a residual quantity of the battery 296, and a voltage, a current, or a temperature during the charging. The battery 296 may include, for example, a rechargeable battery or a solar battery.

The indicator 297 may display a particular state (for example, a booting state, a message state, a charging state, or the like) of the electronic device 201 or a part (for example, the processor 210) of the electronic device 201. The motor 298 may convert an electrical signal into mechanical vibration, and may generate vibration, a haptic effect, or the like. Although not illustrated, the electronic device 201 may include a processing unit (for example, a GPU and/or other processing circuitry) for supporting a mobile television (TV). The processing unit for supporting the mobile TV may, for example, process media data according to a certain standard such as Digital Multimedia Broadcasting (DMB), Digital Video Broadcasting (DVB), or MediaFlo™.

Each of the above-described component elements of hardware according to the present disclosure may be configured with one or more components, and the names of the corresponding component elements may vary based on the type of electronic device. The electronic device according to various example embodiments of the present disclosure may include at least one of the aforementioned elements. Some elements may be omitted or other additional elements may be further included in the electronic device. Also, some of the hardware components according to various example embodiments may be combined into one entity, which may perform functions identical to those of the relevant components before the combination.

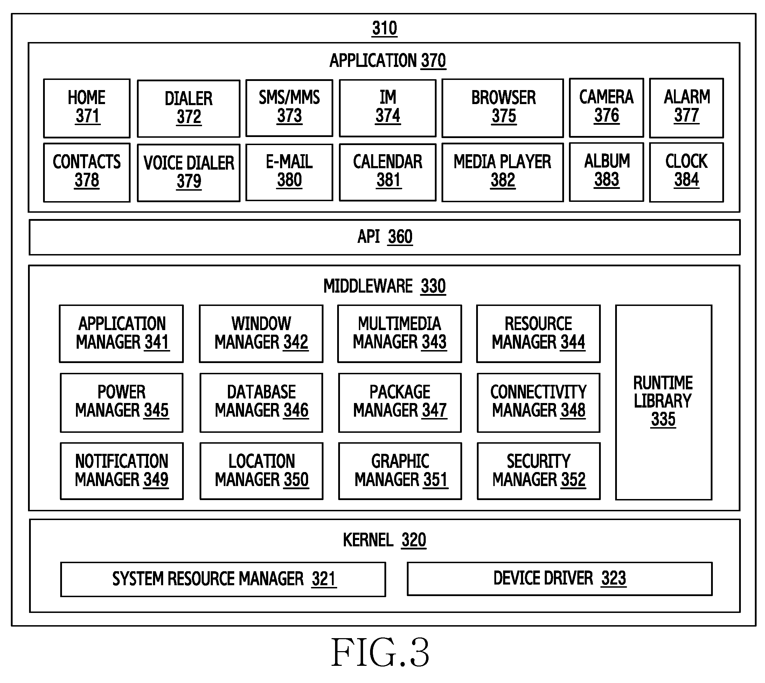

FIG. 3 is a block diagram illustrating an example program module. According to an example embodiment, the program module 310 (for example, the program 140) may include an Operating System (OS) for controlling resources related to the electronic device (for example, the electronic device 101) and/or various applications (for example, the application programs 147) executed in the operating system. The operating system may be, for example, Android, iOS, Windows, Symbian, Tizen, Bada, or the like.

Referring to FIG. 3, the program module 310 may include a kernel 320, middleware 330, an Application Programming Interface (API) 360, and/or applications 370. At least some of the program module 310 may be preloaded on the electronic device, or may be downloaded from an external electronic device (for example, the electronic device 102 or 104, or the server 106).

The kernel 320 (for example, the kernel 141) may include, for example, a system resource manager 321 and/or a device driver 323. The system resource manager 321 may perform the control, allocation, retrieval, or the like of system resources. According to an example embodiment, the system resource manager 321 may include a process manager, a memory manager, a file system manager, or the like. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 330 may provide a function required by the applications 370 in common or provide various functions to the applications 370 through the API 360 so that the applications 370 can efficiently use limited system resources within the electronic device. According to an example embodiment, the middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module which a compiler uses in order to add a new function through a programming language while the applications 370 are being executed. The runtime library 335 may perform input/output management, memory management, the functionality for an arithmetic function, or the like.

The application manager 341 may manage, for example, a life cycle of at least one of the applications 370. The window manager 342 may, for example, manage Graphical User Interface (GUI) resources used for the screen. The multimedia manager 343 may determine a format required to reproduce various media files, and may encode or decode a media file by using a coder/decoder (codec) appropriate for the corresponding format. The resource manager 344 may manage resources, such as a source code, a memory, a storage space, and the like of at least one of the applications 370.

The power manager 345 may operate together with a Basic Input/Output System (BIOS) to manage a battery or power, and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as, for example, Wi-Fi or Bluetooth. The notification manager 349 may display or notify of an event, such as an arrival message, an appointment, a proximity notification, and the like, in such a manner as not to disturb the user. The location manager 350 may manage location information of the electronic device. The graphic manager 351 may manage a graphic effect, which is to be provided to the user, or a user interface related to the graphic effect. The security manager 352 may provide various security functions required for system security, user authentication, and the like. According to an example embodiment, when the electronic device (for example, the electronic device 101) has a telephone call function, the middleware 330 may further include a telephony manager for managing a voice call function or a video call function of the electronic device.

The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements.

The API 360 (for example, the API 145) may, for example, refer to a set of API programming functions, and may be provided with a different configuration according to an OS. For example, in the case of Android or iOS, one API set may be provided for each platform. In the case of Tizen, two or more API sets may be provided for each platform.

The applications 370 (for example, the application programs 147) may include, for example, one or more applications which can provide functions such as home 371, dialer 372, SMS/MMS 373, Instant Message (IM) 374, browser 375, camera 376, alarm 377, contacts 378, voice dialer 379, e-mail 380, calendar 381, media player 382, album 383, clock 384, health care (for example, measure exercise quantity or blood sugar), or environment information (for example, atmospheric pressure, humidity, or temperature information).

According to an example embodiment, the applications 370 may include an application (hereinafter, referred to as an "information exchange application" for convenience and ease of description) supporting information exchange between the electronic device (for example, the electronic device 101) and an external electronic device (for example, the electronic device 102 or 104). The application associated with the exchange of information may include, for example, a notification relay application for transferring specific information to an external electronic device or a device management application for managing an external electronic device.

For example, the notification relay application may include a function of transferring, to the external electronic device (for example, the electronic device 102 or 104), notification information generated from other applications of the electronic device 101 (for example, an SMS/MMS application, an e-mail application, a health management application, or an environmental information application). Further, the notification relay application may receive notification information from, for example, an external electronic device and provide the received notification information to a user.

The device management application may manage (for example, install, delete, or update), for example, a function for at least a part of the external electronic device (for example, the electronic device 102 or 104) communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

According to an example embodiment, the applications 370 may include attributes of applications (for example, a health care application of a mobile medical appliance or the like) designated according to attributes of the external electronic device (for example, the electronic device 102 or 104). According to an example embodiment, the application 370 may include an application received from the external electronic device (for example, the server 106, or the electronic device 102 or 104). According to an example embodiment, the application 370 may include a preloaded application or a third party application which can be downloaded from the server. Names of the elements of the program module 310, according to the above-described example embodiments of the present disclosure, may change depending on the type of OS.

According to various example embodiments of the present disclosure, at least some of the program module 310 may be implemented in software, firmware, hardware, or a combination of two or more thereof. At least some of the program module 310 may be implemented (e.g., executed) by, for example, the processor (e.g., the processor 210 including processing circuitry). At least some of the program module 310 may include, for example, a module, a program, a routine, a set of instructions, and/or a process for performing one or more functions.

The term "module" as used herein may, for example, refer to a unit including one of hardware, software, and firmware or a combination of two or more of them. The "module" may be interchangeably used with, for example, the term "unit", "logic", "logical block", "component", or "circuit". The "module" may, for example, be a minimum unit of an integrated component element or a part thereof. The "module" may be a minimum unit for performing one or more functions or a part thereof. The "module" may be mechanically or electronically implemented. For example, the "module" according to the present disclosure may include at least one of hardware circuitry, firmware, an Application-Specific Integrated Circuit (ASIC) chip, a Field-Programmable Gate Arrays (FPGA), and a programmable-logic device for performing operations which has been known or are to be developed hereinafter.

According to various example embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute or perform the function corresponding to the instruction. The computer-readable storage medium may be, for example, the memory 130.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high level language codes, which can be executed in a computer by using an interpreter, as well as machine codes made by a compiler. The aforementioned hardware device may be configured to operate as one or more software modules in order to perform the example operation of the present disclosure, and vice versa.

The programming module according to the present disclosure may include, for example, one or more of the aforementioned components or may further include other additional components, or some of the aforementioned components may be omitted. Operations executed by a module, a programming module, or other component elements according to various example embodiments of the present disclosure may be executed sequentially, in parallel, repeatedly, or in a heuristic manner. Further, some operations may be executed according to another order or may be omitted, or other operations may be added.

Various example embodiments disclosed herein are provided merely to easily describe various example technical details of the present disclosure and to aid in the understanding of the present disclosure, and are not intended to limit the scope of the present disclosure. Accordingly, the scope of the present disclosure should be construed as including all modifications or various other example embodiments based on the present disclosure.

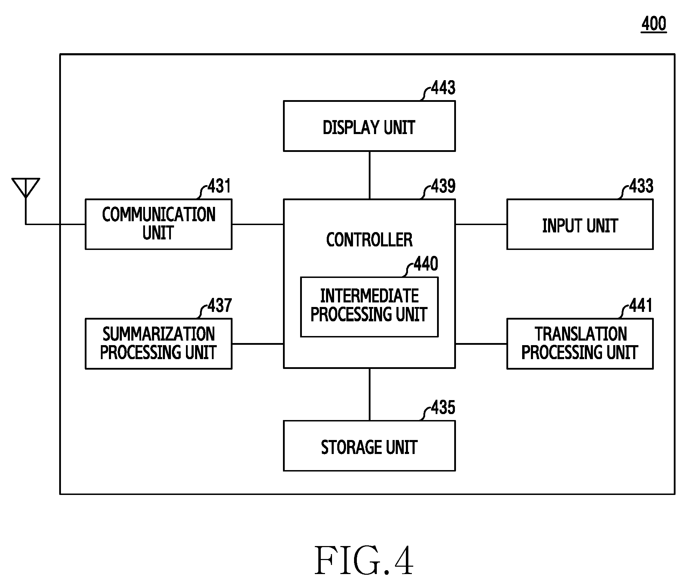

FIG. 4 is a block diagram illustrating an example electronic device according to a first example embodiment.

Referring to FIG. 4, an electronic device 400 according to the first example embodiment of the present disclosure includes a communication unit (e.g., including communication circuitry) 431, an input unit (e.g., including input circuitry) 433, a storage unit (e.g., including a memory) 435, a summarization processing unit (e.g., including processing circuitry) 437, a translation processing unit (e.g., including processing circuitry) 441, a controller (e.g., including processing circuitry) 439, and a display unit (e.g., including a display panel and display driving circuitry) 443.

The communication unit 431 may perform wireless communication of the electronic device 400. The communication unit 431 may perform wireless communication through a base station. Further, the communication unit 431 of the electronic device 400 may access wireless Internet or perform wireless communication with an external electronic device or an external server. To this end, the communication unit 431 may include one or more modules. For example, the communication unit may include one or more modules through schemes such as Long Term Evolution (LTE), Wideband Code Division Multiple Access (WCDMA), Global System for Mobile Communications (GSM), Wi-Fi, Bluetooth, and Near Field Communications (NFC), or the like. The communication unit 431 may be configured to operate as an input unit in the electronic device 400.

The input unit 433 may generate various types of input data in the electronic device 400. The input unit 433 may generate input data in accordance with a user input of the electronic device 400. The input unit 433 may include one or more input circuits. For example, the input unit may include a key pad, a dome switch, a physical button, a touch pad in a capacitive type or a resistive type, a jog & shuttle, and a sensor, or the like.

The storage unit 435 may store operation programs of the electronic device 400. At this time, the storage unit 435 may store a program for processing text. Further, the storage unit 435 may store data generated while the programs are executed.

The summarization processing unit 437 may be configured to summarize text in the electronic device 400. The summarization processing unit 437 may be configured to summarize text in a preset summarization scheme. The summarization processing unit 437 may be configured to extract at least one sentence from the text and to summarize the text.

The controller 439 may be configured to control the general operation of the electronic device 400. The controller 439 may be configured to determine text. The controller 439 may be configured to access wireless Internet through the communication unit 431 and download text. The controller 439 may be configured to receive text from an external electronic device or an external server through the communication unit 431. The controller 439 may be configured to determine input data of the input unit 433 as text. The controller 439 may be configured to determine text stored in the storage unit 435. Further, the controller 439 may be configured to summarize the text by controlling the summarization processing unit 437. In addition, the controller 439 may be configured to translate the text by controlling the translation processing unit 441.

The controller 439 may include an intermediate processing unit (e.g., including processing circuitry) 440. The intermediate processing unit 440 may be configured to process text by defining attributes of analysis units included in the sentence of the text. For example, a morpheme, a word, a phrase, a syntactic word, or the like may be determined as the analysis units. The intermediate processing unit 440 may be configured to analyze at least one of text before the summarization and summarized text and define attributes of the analysis units. The intermediate processing unit 440 may be configured to detect an entity name in the analysis units. For example, the entity name may include a person name, a place name, an institution name, and the like. The intermediate processing unit 440 may be configured to detect a category of the text. The intermediate processing unit 440 may be configured to define the attributes of the analysis units based on the category of the text. For example, the category of the text may be determined based on at least one of an Internet address of the text and a user's selection. Further, the intermediate processing unit 440 may be configured to edit sentences within the text based on the attributes of the analysis units. The intermediate processing unit 440 may be configured to delete or replace at least one of the analysis units in the sentence of the text. In addition, the intermediate processing unit 440 may be configured to split the sentence within the text.

The translation processing unit 441 may be configured to translate text in the electronic device 400. For example, the translation processing unit 441 may be configured to convert the text from a current language to another language. The translation processing unit 441 may be configured to grasp a meaning of the text in the current language. With respect to the current language, the translation processing unit 441 may be configured to determine meanings of analysis units based on attributes of the analysis units. The translation processing unit 441 may be configured to replace the current language with another language. With respect to the other language, the translation processing unit 441 may be configured to determine meanings of analysis units based on attributes of the analysis units. The translation processing unit 441 may be configured to synthesize the text in the other language. The translation processing unit 441 may be configured to synthesize the text based on grammar of the other language.

The display unit 443 may output display data under a control of the controller 439. The display unit 443 may display text. The display unit 443 may include a Liquid Crystal Display (LCD), a Light Emitting Diode (LED) display, an Organic Light Emitting Diode (OLED) display, a Micro Electro Mechanical System (MEMS) display, or an electronic paper display, or the like. Further, the display unit 443 may include, for example, a touch screen and be configured to operate as an input unit.

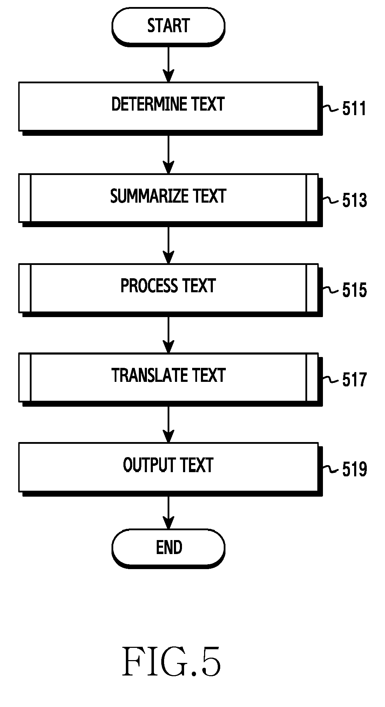

FIG. 5 is a flowchart illustrating an example method of processing text according to the first example embodiment.

Referring to FIG. 5, the controller 439 may be configured to determine text in operation 511. The controller 439 may be configured to access wireless Internet through the communication unit 431 and download text. The controller 439 may be configured to receive text from an external electronic device or an external server through the communication unit 431. The controller 439 may be configured to determine input data of the input unit 433 as text. The controller 439 may be configured to determine text stored in the storage unit 435.

The controller 439 may be configured to summarize the text in operation 513. The controller 439 may be configured to summarize the text by controlling the summarization processing unit 437. The summarization processing unit 437 may be configured to summarize the text in a preset summarization scheme. For example, the summarization scheme may include a supervised learning scheme, an unsupervised learning scheme, and a mixed scheme of the supervised learning scheme and the unsupervised learning scheme. The summarization processing unit 437 may be configured to extract at least one sentence from the text and summarize the text.

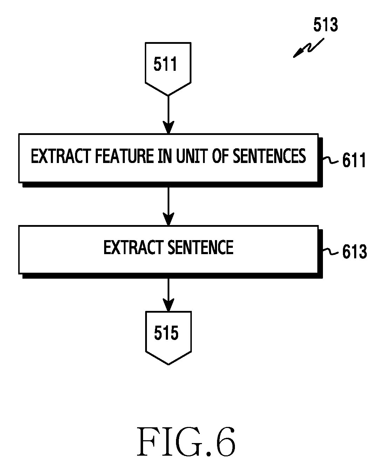

FIG. 6 is a flowchart illustrating an example of the text summarizing process of FIG. 5. FIG. 6 may illustrate a text summarizing process through, for example, the supervised learning scheme.

Referring to FIG. 6, the summarization processing unit 415 may be configured to extract a feature from the text in operation 611. The text may include a plurality of sentences. The summarization processing unit 415 may be configured to extract the feature from the text in the unit of sentences. For example, the summarization processing unit 415 may analyze analysis units in each sentence, analyze a grammar applied to each sentence, and analyze a meaning of each sentence.

The summarization processing unit 415 may be configured to extract at least one sentence from the text in operation 613. The summarization processing unit 415 may be configured to classify sentences based on features of the sentences. The summarization processing unit 415 may be configured to analyze a location of each feature within the text and a correlation with a text title. Thereafter, the summarization processing unit 415 may return to FIG. 5.

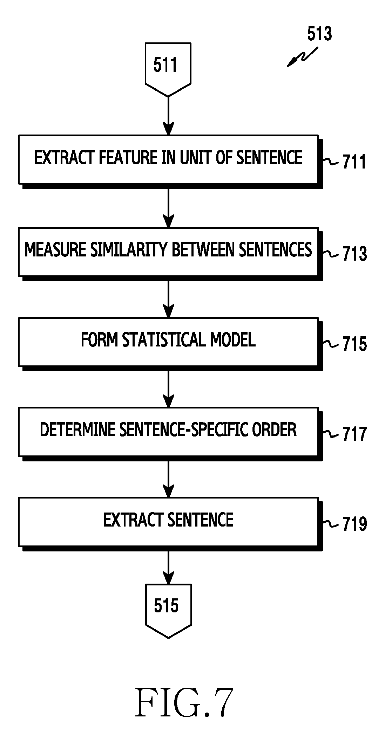

FIG. 7 is a flowchart illustrating another example of the text summarizing process of FIG. 5. FIG. 7 may illustrate a text summarizing process through, for example, the unsupervised learning scheme.

Referring to FIG. 7, the summarization processing unit 415 may be configured to extract a feature from the text in operation 711. The text may include a plurality of sentences. The summarization processing unit 415 may be configured to extract the feature from the text in the unit of sentences. The summarization processing unit 415 may be configured to analyze analysis units in each sentence, analyze a grammar applied to each sentence, and analyze a meaning of each sentence. The summarization processing unit 415 may be configured to measure measure a similarity between sentences within the text in operation 713. The summarization unit 415 may be configured to compare and analyze features of the sentences to determine similarity between sentences.

The summarization processing unit 415 may be configured to form a statistical model in operation 715. The summarization processing unit 415 may be configured to form the statistical model using a relation between each sentence and the similarity. In the statistical model, each sentence may, for example, be expressed by a vertex and the similarity may be expressed by an edge. Thereafter, the summarization processing unit 415 may be configured to determine a sentence-specific order in operation 717. The summarization processing unit 415 may be configured to determine the sentence-specific order based on the statistical model.

The summarization processing unit 415 may be configured to extract at least one sentence from the text in operation 719. The summarization processing unit 415 may be configured to extract the sentence based on the order. For example, the summarization processing unit 415 may be configured to extract the sentence having a higher order than a preset order. Thereafter, the summarization processing unit 415 may return to FIG. 5.

Subsequently, the controller 439 may be configured to process the text in operation 515. The intermediate processing unit 440 of the controller 439 may be configured to process text by defining attributes of analysis units in the sentence of the text. The intermediate processing unit 440 may be configured to analyze at least one of text before the summarization and summarized text and define attributes of the analysis units.

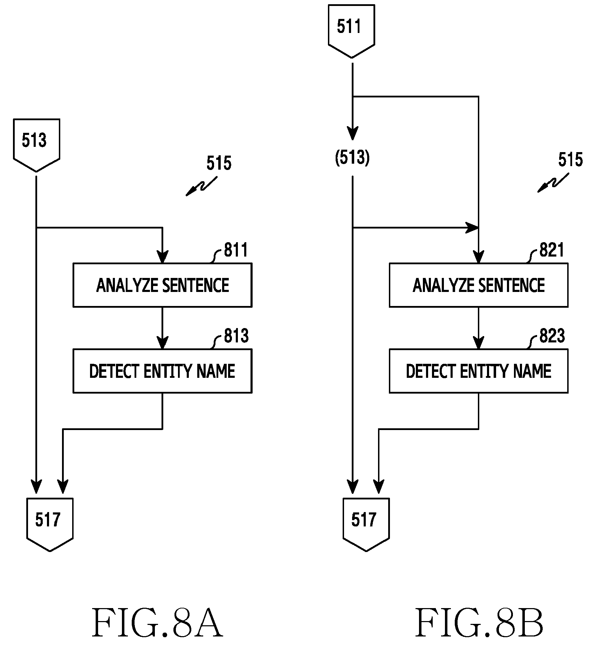

FIGs. 8A and 8B are flowcharts illustrating an example of the text processing process of FIG. 5.

Referring to FIGs. 8A and 8B, the intermediate processing unit 440 may be configured to analyze the sentences within the text in operations 811 and 821. The intermediate processing unit 440 may be configured to analyze summarized text in operation 811 as illustrated in FIG. 8A. Meanwhile, the intermediate processing unit 440 may be configured to analyze the text before the summarization in operation 821 as illustrated in FIG. 8B. The intermediate processing unit 440 may be configured to analyze each sentence within the text. Further, the intermediate processing unit 440 may be configured to define attributes of the analysis units in each sentence.

The intermediate processing unit 440 may be configured to detect an entity name in the sentence within the text in operations 813 and 823. For example, the entity name may include a person name, a place name, an institution name, and the like. The intermediate processing unit 440 may be configured to analyze analysis units in each sentence based on the attributes of the analysis units. The intermediate processing unit 440 may be configured to analyze a location of each analysis unit within the sentence, an attribute of an adjacent analysis unit, a number of times of repetitions within the text, etc. The intermediate processing unit 440 may be configured to detect the entity name in the analysis units based on a result of the analysis. For example, the intermediate processing unit 440 may be configured to detect, as the entity name, "White" and "Page" from the sentence "White addressed Page's denial of the bribery in the interview". Thereafter, the intermediate processing unit 440 may return to FIG. 5.

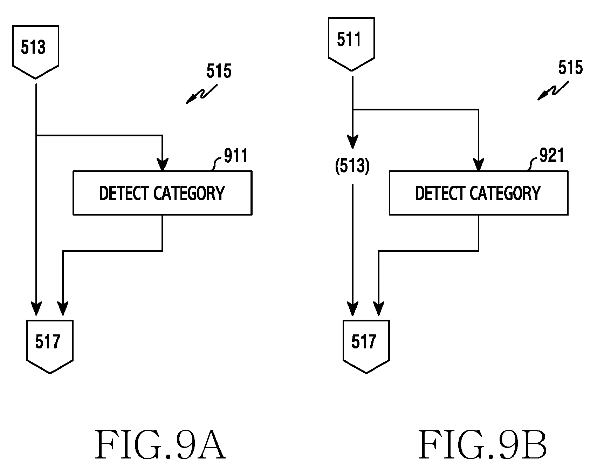

FIGS. 9A and 9B are flowcharts illustrating another example of the text processing' process of FIG. 5.

Referring to FIGS. 9A and 9B, the intermediate processing unit 440 may be configured to detect a category of the text in operations 911 and 921. The intermediate processing unit 440 may be configured to detect the category from the summarized text in operation 911 as illustrated in FIG. 9A. The intermediate processing unit 440 may be configured to detect the category from the text before the summarization in operation 921 as illustrated in FIG. 9B. For example, the category may include news, sports, foods, finance, and the like. The intermediate processing unit 440 may be configured to identify an Internet address of the text and detect the category of the text from the Internet address. For example, when the Internet address of the text is www.xxx.com/news, the intermediate processing unit 440 may be configured to detect news as the category of the text. The intermediate processing unit 440 may be configured to detect the category of the text based on a user's selection. For example, the intermediate processing unit 440 may be configured to make a request for selecting the category to the user of the electronic device 400 and detect the category of the text in accordance with the user's selection. Thereafter, the intermediate processing unit 440 may return to FIG. 5.

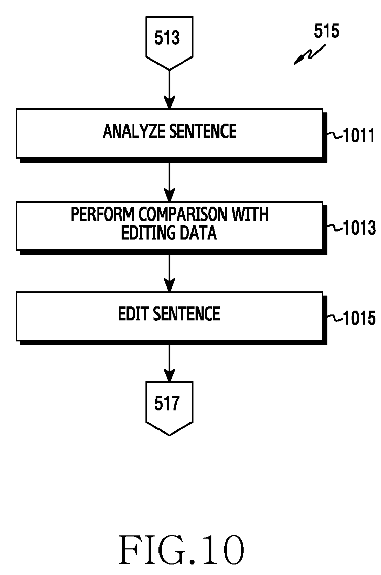

FIG. 10 is a flowchart illustrating another example of the text processing process of FIG. 5.

Referring to FIG. 10, the intermediate processing unit 440 may be configured to analyze the sentences within the text in operation 1011. The intermediate processing unit 440 may be configured to define attributes of the analysis units in each sentence. The intermediate processing unit 440 may be configured to compare the analysis units within the sentence with editing data in operation 1013. The storage unit 435 may store the editing data. The editing data may include an expression including at least one analysis unit and an editing method of the corresponding expression. For example, the editing data may include various conjunctions, modifying expressions, adverbial expressions, difficult expressions, and the like.

The intermediate processing unit 440 may be configured to edit the sentence in operation 1015. The intermediate processing unit 440 may be configured to edit the sentence in accordance with the editing data. The intermediate processing unit 440 may be configured to delete or replace at least one of the analysis units in the sentence of the text. The intermediate processing unit 440 may be configured to split the sentence within the text. Thereafter, the intermediate processing unit 440 may return to FIG. 5.

For example, the intermediate processing unit 440 may be configured to delete the conjunction ", however," from the sentence 'He, however, will not attend the meeting." to make the sentence "He will not attend the meeting." The intermediate processing unit 440 may be configured to delete the modifying expression or the adverbial expression "In short," from the sentence "In short, it is the first time in about a decade that Iran has agreed to halt some of its nuclear activities." to make the sentence "It is the first time in about a decade that Iran has agreed to halt some of its nuclear activities." The intermediate processing unit 440 may be configured to split the complex sentence "The Chinese government released a map and coordinates on Saturday that show the zone covers most of the East China Sea, including the islands." to make the sentences "The Chinese government released a map and coordinates on Saturday. It shows the zone covers most of the East China Sea, including the islands." The intermediate processing unit 440 may be configured to replace some expressions of the sentence "He elevated it." with general expressions to make the sentence "He put it up."

The controller 439 may be configured to translate the text in operation 517. The controller 439 may be configured to translate the text by controlling the translation processing unit 441. The translation processing unit 441 may be configured to convert the text from a current language to another language.

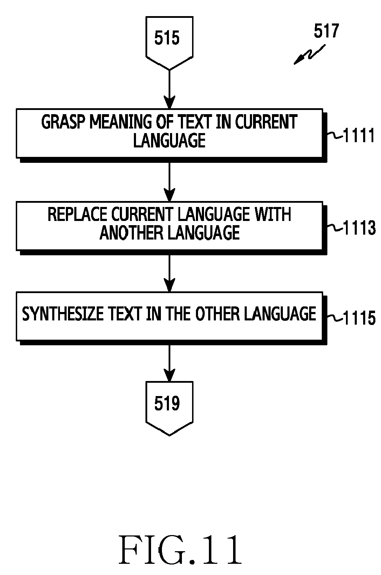

FIG. 11 is a flowchart illustrating the text translating process of FIG. 5.

Referring to FIG. 11, the translation processing unit 441 may be configured to grasp a meaning of the text based on the current language in operation 1111. With respect to the current language, the translation processing unit 441 may be configured to determine meanings of analysis units based on attributes of the analysis units. The translation processing unit 441 may be configured to grasp an entity name in the analysis units and to determine a meaning as the entity name. The translation processing unit 441 may be configured to determine meanings of the analysis units based on a category of the text. For example, when the analysis unit has multiple meanings, the translation processing unit 441 may be configured to select a meaning of the analysis unit based on the category of the text.

The translation processing unit 441 may be configured to replace the current language with another language in operation 1113. With respect to the other language, the translation processing unit 441 may be configured to determine meanings of analysis units based on attributes of the analysis units. The translation processing unit 441 may be configured to grasp an entity name in the analysis units and to process the entity name. For example, the translation processing unit 441 may be configured to process the entity name through a method of transliterating the entity name, maintaining the current language of the entity name, or alternatively using a higher concept of the corresponding entity name.

The translation processing unit 441 may be configured to synthesize the text in the other language in operation 1115. The translation processing unit 441 may synthesize the text based on grammar of the other language. Thereafter, the translation processing unit 441 may return to FIG. 5.

The controller 439 may be configured to output the text in operation 519. The controller 439 may be configured to display the text by controlling the display unit 443. The controller 439 may be configured to output the text in another language.

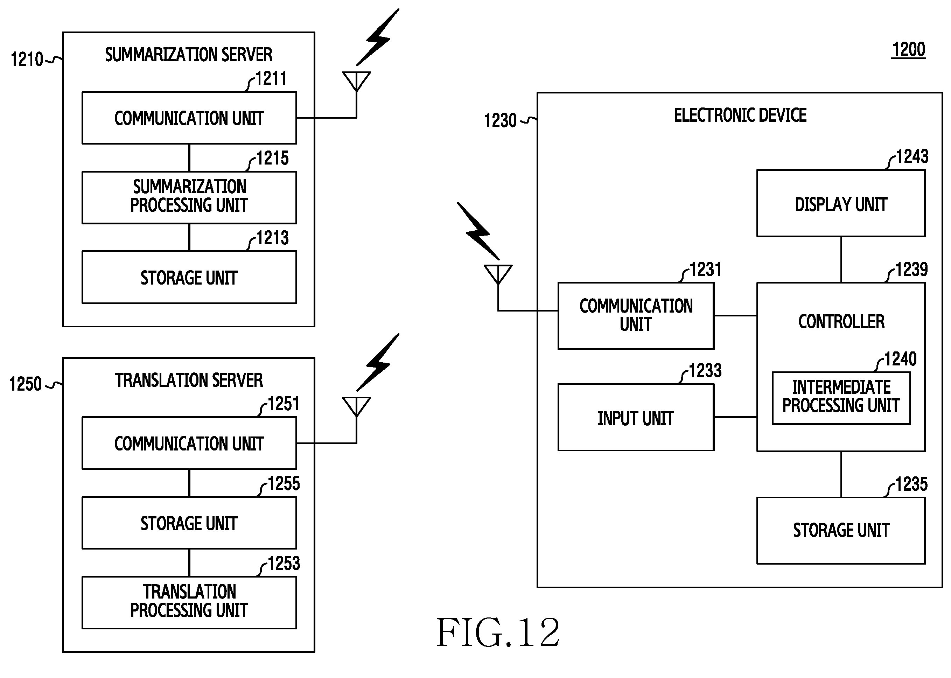

FIG. 12 is a block diagram illustrating an example network environment including an electronic device according to a second example embodiment of the present disclosure.

Referring to FIG. 12, a network environment 1200 according to the second example embodiment of the present disclosure may include a summarization server 1210, an electronic device 1230, and a translation server 1250. In the network environment 1200, the summarization server 1210, the electronic device 1230, and the translation server 1250 may perform wireless communication.

The summarization server 1210 may include a communication unit (e.g., including communication circuitry) 1211, a storage unit (e.g., including a memory) 1213, and a summarization processing unit (e.g., including processing circuitry) 1215.

The communication unit 1211 may be configured to perform wireless communication with the electronic device 1230 in the summarization server 1210. The communication unit 1211 may perform wireless communication with the electronic device 1230 through a base station. The communication unit 1211 may include one or more modules. For example, the communication unit may include one or more modules through schemes such as Long Term Evolution (LTE), Wideband Code Division Multiple Access (WCDMA), Global System for Mobile Communications (GSM), Wi-Fi, Bluetooth, and Near Field Communications (NFC), or the like. The communication unit 1211 may be configured to operate as an input unit in the summarization server 1210.

The storage unit 1213 may store operation programs of the summarization server 1210. The storage unit 1213 may store a program for summarizing text. Further, the storage unit 1213 may store data generated while programs are executed.

The summarization processing unit 1215 may be configured to summarize text in the summarization server 1210. The summarization processing unit 1215 may be configured to receive text from the electronic device 1230 through the communication unit 1211. The summarization processing unit 1215 may be configured to summarize the text in a preset summarization scheme. The summarization processing unit 1215 may be configured to extract at least one sentence from the text and summarize the text. The summarization processing unit 1215 may be configured to transmit the text to the electronic device 1230 through the communication unit 1211.

The electronic device 1230 may include a communication unit (e.g., including communication circuitry) 1231, an input unit (e.g., including input circuitry) 1233, a storage unit (e.g., including a memory) 1235, a controller (e.g., including processing circuitry) 1239, and a display unit (e.g., including a display panel and display driving circuitry) 1243. The controller 1239 may include an intermediate processing unit (e.g., including processing circuitry) 1240. Since each element of the electronic device 1230 according to the second example embodiment of the present disclosure is similar to the element corresponding to the above described embodiment, a detailed description thereof will be omitted.

However, the communication unit 1231 of the electronic device 1230 may perform wireless communication with the summarization server 1210 and the translation server 1250. The communication unit 1231 may perform wireless communication with the summarization server 1210 and the translation server 1250 through the base station.

The controller 1239 may be configured to control the general operation of the electronic device 1230. The controller 1239 may be configured to determine text. The controller 1239 may be configured to summarize the text. The controller 1239 may be configured to transmit the text to the summarization server 1210 through the communication 1231 and to make a request for summarizing the text. Further, the controller 1239 may be configured to translate the text. The controller 1239 may be configured to transmit the text to the translation server 1250 through the communication 1231 and to make a request for translating the text.

The controller 1239 may be configured to receive the text from the summarization server 1210 through the communication unit 1231. The intermediate processing unit 1240 of the controller 1239 may be configured to process the text by defining attributes of analysis units in the sentence of the text. The intermediate processing unit 1240 may be configured to analyze at least one of text before the summarization and summarized text and define attributes of the analysis units. Accordingly, the controller 1239 may be configured to transmit the attributes of the analysis units along with the text to the translation server 1250. Further, the intermediate processing unit 1240 may be configured to edit the sentence within the text based on the attributes of the analysis units and then to transmit the edited text to the translation server 1250. The controller 1239 may be configured to receive the text from the translation server 1250 through the communication unit 1231.

The translation server 1250 may include, for example, a communication unit (e.g., including communication circuitry) 1251, a storage unit (e.g., including a memory) 1253, and a translation processing unit (e.g., including processing circuitry) 1255.

The communication unit 1251 may be configured to perform wireless communication with the electronic device 1230 in the translation server 1250. The communication unit 1251 may be configured to perform wireless communication with the electronic device 1230 through a base station. The communication unit 1251 may include, for example, one or more modules. For example, the communication unit may include one or more modules through schemes such as Long Term Evolution (LTE), Wideband Code Division Multiple Access (WCDMA), Global System for Mobile Communications (GSM), Wi-Fi, Bluetooth, and Near Field Communications (NFC), or the like. The communication unit 1251 may be configured to operate as an input unit in the translation server 1250.

The storage unit 1253 may store operation programs of the translation server 1250. The storage unit 1253 may store a program for translating text. Further, the storage unit 1253 may store data generated while programs are executed.

The translation processing unit 1255 may be configured to translate the text in the translation server 1250. The translation processing unit 1255 may be configured to receive the text from the electronic device 1230 through the communication unit 1251. The translation processing unit 1255 may be configured to receive attributes of analysis units within the text from the electronic device 1230 through the communication unit 1251. The translation processing unit 1255 may be configured to convert the text from a current language to another language. The translation processing unit 1255 may be configured to grasp a meaning of the text based on the current language. With respect to the current language, the translation processing unit 1255 may be configured to determine meanings of analysis units according to attributes of the analysis units. The translation processing unit 1255 may be configured to replace the current language with another language. With respect to the other language, the translation processing unit 1255 may be configured to determine meanings of analysis units based on the attributes of the analysis units. Further, the translation processing unit 1255 may be configured to synthesize the text in the other language. The translation processing unit 1255 may be configured to synthesize the text based on grammar of the other language.

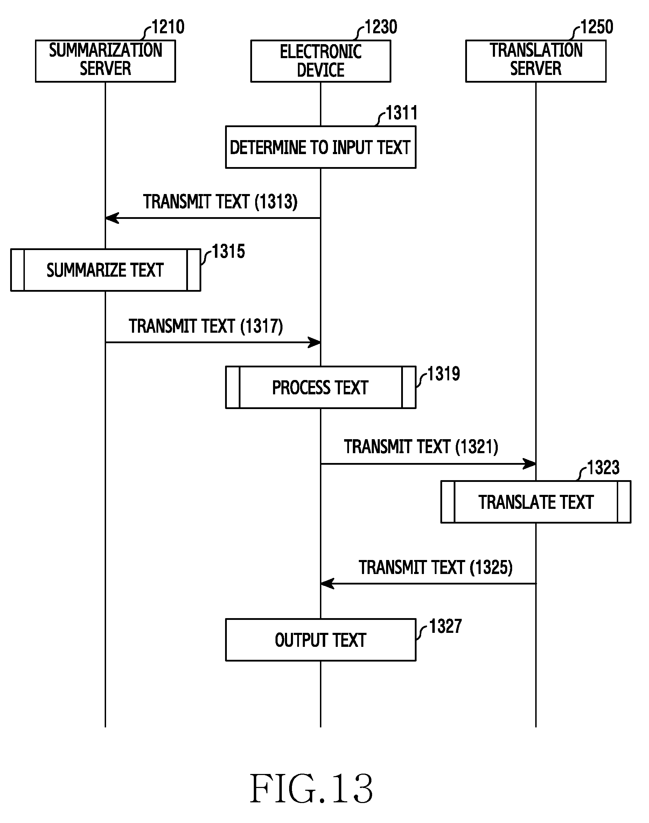

FIG. 13 is a flowchart in the form of a sequence diagram illustrating an example method of processing text according to the second example embodiment of the present disclosure.

Referring to FIG. 13, the electronic device 1230 may determine to input text in operation 1311. At this time, the controller 1239 may access wireless Internet through the communication unit 1231 and download text. Alternatively, the controller 1239 may receive text from an external electronic device or an external server through the communication unit 1231. Alternatively, the controller 1239 may determine input data of the input unit 1233 as text. Alternatively, the controller 1239 may determine text stored in the storage unit 1235. Thereafter, the electronic device 1230 may transmit the text to the summarization server 1210 in operation 1313. At this time, the controller 1239 may transmit the text to the summarization server 1210 through the communication unit 1231 and make a request for summarizing the text.

Next, the summarization server 1210 may summarize the text in operation 1315. At this time, the summarization processing unit 1215 may summarize the text in a preset summarization scheme. The summarization processing unit 1215 may extract at least one sentence from the text and summarize the text. The summarization processing unit 1215 may summarize the text as illustrated, for example, in FIG. 6 or 7. Thereafter, the summarization server 1210 may transmit the summarized text to the electronic device 1230 in operation 1317. At this time, the summarization processing unit 1215 may transmit the text to the electronic device 1230 through the communication unit 1211.

Subsequently, the electronic device 1230 may process the text in operation 1319. At this time, the intermediate processing unit 1240 of the controller 1239 may process the text by defining attributes of analysis units in the sentence of the text. The intermediate processing unit 1240 may analyze at least one of text before the summarization and summarized text and define attributes of the analysis units. The intermediate processing unit 1240 may process the text as illustrated, for example, in FIG. 8, 9, or 10. Thereafter, the electronic device 1230 may transmit the text to the translation server 1250 in operation 1321. At this time, the controller 1239 may transmit the text to the translation server 1250 through the communication unit 1231 and make a request for translating the text. The controller 1239 may transmit the attributes of the analysis units along with the text to the translation server 1250. Further, the intermediate processing unit 1240 may edit the sentence within the text based on the attributes of the analysis units and then transmit the edited text to the translation server 1250.

Subsequently, the translation server 1250 may translate the text in operation 1323. At this time, the translation processing unit 1255 may convert the text from a current language to another language. Further, the translation processing unit 1255 may translate the text as illustrated, for example, in FIG. 11. Thereafter, the translation server 1250 may transmit the text to the electronic device 1230 in operation 1325. At this time, the translation processing unit 1255 may transmit the text to the electronic device 1230 through the communication unit 1251.

The electronic device 1230 may output the text in operation 1327. At this time, the controller 1239 may display the text by controlling the display unit 1243. The controller 1239 may output the text with another language.

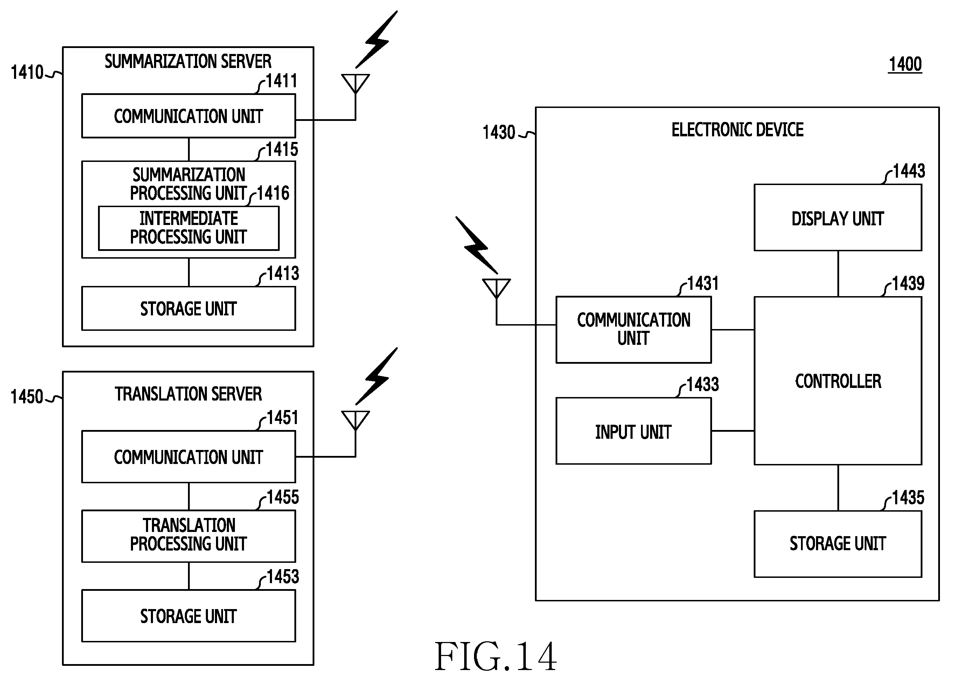

FIG. 14 is a block diagram illustrating an example network environment including an example electronic device according to a third example embodiment of the present disclosure.

Referring to FIG. 14, a network environment 1400 according to the third example embodiment of the present disclosure may include a summarization server 1410, an electronic device 1430, and a translation server 1450. In the network environment 1400, the summarization server 1410, the electronic device 1430, and the translation server 1450 may perform wireless communication.

The summarization server 1410 may include a communication unit (e.g., including communication circuitry) 1411, a storage unit (e.g., including a memory) 1413, and a summarization processing unit (e.g., including processing circuitry) 1415. Since each element of the summarization server 1410 according to the third example embodiment of the present disclosure is similar to the element corresponding to the above described embodiment, a detailed description thereof will be omitted.

However, the summarization processing unit 1415 may include an intermediate processing unit (e.g., including processing circuitry) 1416. For example, the summarization processing unit 1415 may be configured to summarize text in the summarization server 1410. The intermediate processing unit 1416 of the summarization processing unit 1415 may be configured to process the text by defining attributes of analysis units in the sentence of the text. The intermediate processing unit 1416 may be configured to analyze at least one of text before the summarization and summarized text and define attributes of the analysis units. Accordingly, the summarization processing unit 1415 may be configured to transmit the attributes of the analysis units along with the text to the electronic device 1430. Further, the intermediate processing unit 1416 may be configured to edit the sentence within the text according to the attributes of the analysis units and then transmit the edited text to the electronic device 1430.

Meanwhile, the summarization processing unit 1415 may be configured to transmit the text to the translation server 1450 through the communication unit 1411. The summarization processing unit 1415 may be configured to transmit the attributes of the analysis units along with the text to the translation server 1450. Further, the intermediate processing unit 1440 may be configured to edit the sentence within the text based on the attributes of the analysis units and then transmit the edited text to the translation server 1450.

The electronic device 1430 may include a communication unit (e.g., including communication circuitry) 1431, an input unit (e.g., including input circuitry) 1433, a storage unit (e.g., including a memory) 1435, a controller (e.g., including processing circuitry) 1439, and a display unit (e.g., including a display panel and display driving circuitry) 1443. Since each element of the electronic device 1430 according to the third example embodiment of the present disclosure is similar to the element corresponding to the above described embodiment, a detailed description thereof will be omitted.

However, the controller 1439 may be configured to control the general operation of the electronic device 1430. The controller 1439 may be configured to determine text. The controller 1439 may be configured to summarize the text. The controller 1439 may be configured to transmit the text to the summarization server 1410 through the communication 1431 and to make a request for summarizing the text. Further, the controller 1439 may be configured to receive the text from the summarization server 1410 through the communication unit 1431. The controller 1439 may be configured to receive the attributes of the analysis units along with the text. Further, the controller 1439 may be configured to translate the text. The controller 1439 may be configured to transmit the text to the translation server 1450 through the communication unit 1431 and to make a request for translating the text. The controller 1439 may be configured to transmit the attributes of the analysis units along with the text. The controller 1439 may be configured to receive the text from the translation server 1450 through the communication unit 1431.

The translation server 1450 may include a communication unit (e.g., including communication circuitry) 1451, a storage unit (e.g., including a memory) 1453, and a translation processing unit (e.g., including processing circuitry) 1455. Since each element of the translation server 1450 according to the third example embodiment of the present disclosure is similar to the element corresponding to the above described embodiment, a detailed description thereof will be omitted.

However, the translation processing unit 1455 may be configured to receive the text from the electronic device 1430 through the communication unit 1451. The translation processing unit 1455 may be configured to receive attributes of analysis units within the text from the electronic device 1430 through the communication unit 1451. Meanwhile, the translation processing unit 1455 may be configured to receive the text from the summarization server 1410 through the communication unit 1451. Further, the translation processing unit 1455 may be configured to receive the attributes of the analysis units along with the text from the summarization server 1410.

The translation processing unit 1455 may be configured to convert the text from a current language to another language. For example, the translation processing unit 1455 may be configured to grasp a meaning of the text based on the current language. With respect to the current language, the translation processing unit 1455 may be configured to determine meanings of analysis units based on attributes of the analysis units. The translation processing unit 1455 may be configured to replace the current language with another language. With respect to the other language, the translation processing unit 1455 may be configured to determine meanings of analysis units according to the attributes of the analysis units. In addition, the translation processing unit 1455 may be configured to synthesize the text in another language. In this example, the translation processing unit 1455 may be configured to combine the text based on the grammar of the other language.

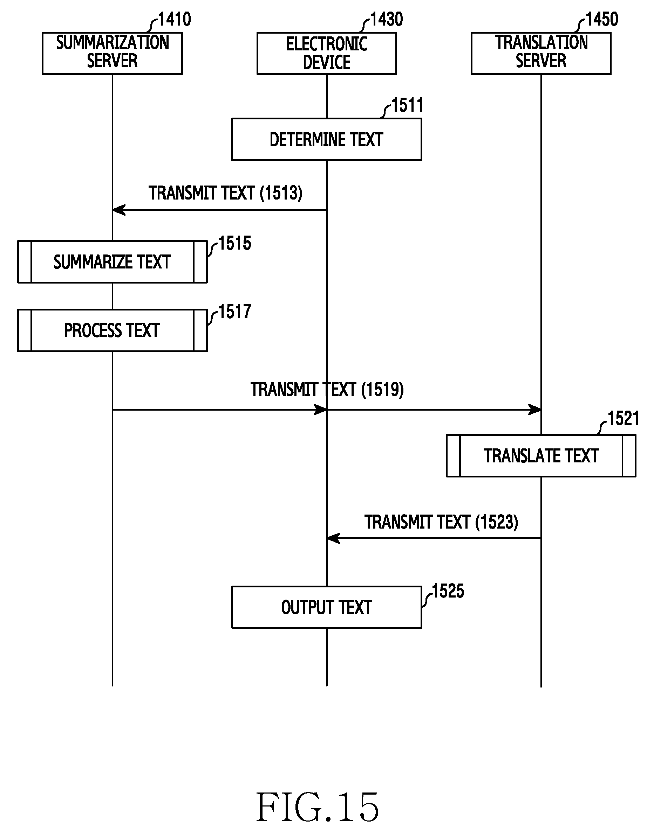

FIG. 15 is a flowchart in the form of a sequence diagram illustrating an example method of processing text according to the third example embodiment of the present disclosure.

Referring to FIG. 15, the electronic device 1430 may determine text in operation 1511. At this time, the controller 1439 may access wireless Internet through the communication unit 1431 and download text. Alternatively, the controller 1439 may receive text from an external electronic device or an external server through the communication unit 1431. Alternatively, the controller 1439 may determine input data of the input unit 1433 as text. Alternatively, the controller 1439 may determine text stored in the storage unit 1435. Thereafter, the electronic device 1430 may transmit the text to the summarization server 1410 in operation 1513. At this time, the controller 1439 may transmit the text to the summarization server 1410 through the communication unit 1431 and make a request for summarizing the text.

Next, the summarization server 1410 may summarize the text in operation 1515. At this time, the summarization processing unit 1415 may summarize the text in a preset summarization scheme. The summarization processing unit 1415 may extract at least one sentence from the text and summarize the text. The summarization processing unit 1415 may summarize the text as illustrated, for example, in FIG. 6 or 7.

Subsequently, the summarization server 1410 may process the text in operation 1517. At this time, the intermediate processing unit 1416 of the summarization processing unit 1415 may process the text by defining attributes of analysis units in the sentence of the text. The intermediate processing unit 1416 may analyze at least one of text before the summarization and summarized text and define attributes of the analysis units. The intermediate processing unit 1416 may process the text as illustrated, for example, in FIG. 8, 9, or 10. Thereafter, the summarization server 1410 may transmit the text to the translation server 1450 in operation 1519. The summarization server 1410 may transmit the text to the translation server 1450 through the electronic device 1430. At this time, the summarization server 1415 may transmit the text to the translation server 1450 through the communication unit 1411 and make a request for translating the text. The summarization processing unit 1415 may transmit the attributes of the analysis units along with the text to the translation server 1450. Further, the intermediate processing unit 1416 may edit the sentence within the text according to the attributes of the analysis units and then transmit the edited text to the translation server 1450.

Subsequently, the translation server 1450 may translate the text in operation 1521. At this time, the translation processing unit 1455 may convert the text from a current language to another language. Further, the translation processing unit 1455 may translate the text as illustrated, for example, in FIG. 11. Thereafter, the translation server 1450 may transmit the text to the electronic device 1430 in operation 1523. At this time, the translation processing unit 1455 may transmit the text to the electronic device 1430 through the communication unit 1451.

The electronic device 1430 may output the text in operation 1525. At this time, the controller 1439 may display the text by controlling the display unit 1443. The controller 1439 may output the text with another language.

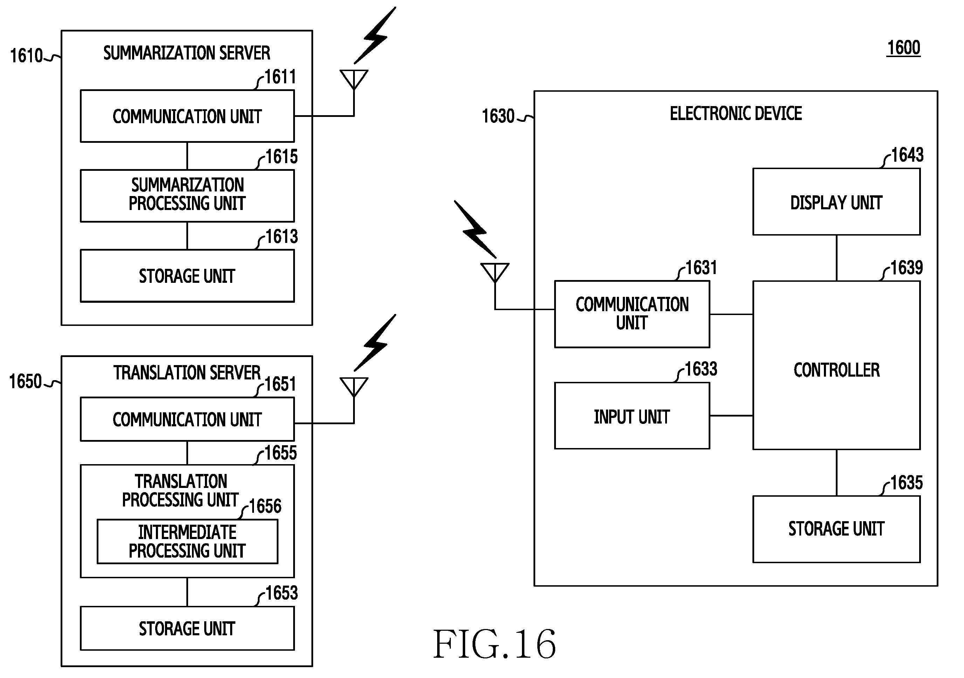

FIG. 16 is a block diagram illustrating an example network environment including an example electronic device according to a fourth example embodiment of the present disclosure.

Referring to FIG. 16, a network environment 1600 according to the fourth example embodiment of the present disclosure may include a summarization server 1610, an electronic device 1630, and a translation server 1650. In the network environment 1600, the summarization server 1610, the electronic device 1630, and the translation server 1650 may perform wireless communication.

The summarization server 1610 may include a communication unit (e.g., including communication circuitry) 1611, a storage unit (e.g., including a memory) 1613, and a summarization processing unit (e.g., including processing circuitry) 1615. Since each element of the summarization server 1610 according to the fourth example embodiment of the present disclosure is similar to the element corresponding to the above described embodiment, a detailed description thereof will be omitted.

However, the summarization server 1610 may be configured to transmit the text to the electronic device 1430 through the communication unit 1611. Meanwhile, the summarization server 1610 may be configured to transmit the text to the translation server 1650 through the communication unit 1611.

The electronic device 1630 may include a communication unit (e.g., including communication circuitry) 1631, an input unit (e.g., including input circuitry) 1633, a storage unit (e.g., including a memory) 1635, a controller (e.g., including processing circuitry) 1639, and a display unit (e.g., including a display panel and display driving circuitry) 1643. Since each element of the electronic device 1630 according to the fourth example embodiment of the present disclosure is similar to the element corresponding to the above described embodiment, a detailed description thereof will be omitted.

The translation server 1650 may include a communication unit (e.g., including communication circuitry) 1651, a storage unit (e.g., including a memory) 1653, and a translation processing unit (e.g., including processing circuitry) 1655. Since each element of the translation server 1650 according to the fourth example embodiment of the present disclosure is similar to the element corresponding to the above described embodiment, a detailed description thereof will be omitted.

However, the translation processing unit 1655 may be configured to receive the text from the electronic device 1630 through the communication unit 1651. Meanwhile, the translation processing unit 1655 may be configured to receive the text from the summarization server 1610 through the communication unit 1651.

The translation processing unit 1655 may include an intermediate processing unit (e.g., including processing circuitry) 1656. For example, the intermediate processing unit 1656 of the translation processing unit 1655 may be configured to process the text by defining attributes of analysis units in the sentence of the text. The translation processing unit 1655 may be configured to analyze at least one of text before the summarization and summarized text and define attributes of the analysis units. Further, the intermediate processing unit 1656 may be configured to edit the sentence within the text based on the attributes of the analysis units.

The translation processing unit 1655 may be configured to translate the text. The translation processing unit 1655 may be configured to convert the text from a current language to another language. For example, the translation processing unit 1655 may be configured to grasp a meaning of the text based on the current language. With respect to the current language, the translation processing unit 1655 may be configured to determine meanings of analysis units based on attributes of the analysis units. The translation processing unit 1655 may be configured to replace the current language with another language. With respect to the other language, the translation processing unit 1655 may be configured to determine meanings of analysis units based on the attributes of the analysis units. The translation processing unit 1655 may be configured to synthesize the text in the other language. The translation processing unit 1655 may be configured to synthesize the text based on grammar of the other language.

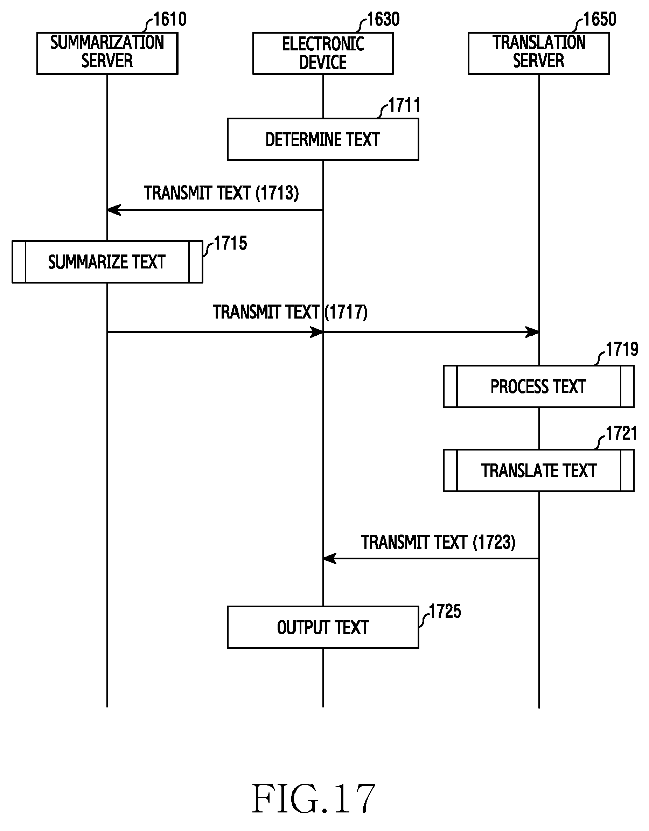

FIG. 17 is a flowchart in the form of a sequence diagram illustrating an example method of processing text according to the fourth example embodiment of the present disclosure.

Referring to FIG. 17, the electronic device 1630 may determine text in operation 1711. At this time, the controller 1639 may access wireless Internet through the communication unit 1631 and download text. Alternatively, the controller 1639 may receive text from an external electronic device or an external server through the communication unit 1631. Alternatively, the controller 1639 may determine input data of the input unit 1633 as text. Alternatively, the controller 1639 may determine text stored in the storage unit 1635. Thereafter, the electronic device 1630 may transmit the text to the summarization server 1610 in operation 1713. At this time, the controller 1639 may transmit the text to the summarization server 1610 through the communication unit 1631 and make a request for summarizing the text.

Next, the summarization server 1610 may summarize the text in operation 1715. At this time, the summarization processing unit 1615 may summarize the text in a preset summarization scheme. The summarization processing unit 1615 may extract at least one sentence from the text and summarize the text. The summarization processing unit 1615 may summarize the text as illustrated, for example, in FIG. 6 or 7. Thereafter, the summarization server 1610 may transmit the text to the translation server 1650 in operation 1717. The summarization server 1610 may transmit the text to the translation server 1650 through the electronic device 1630. At this time, the summarization server 1615 may transmit the text to the translation server 1650 through the communication unit 1611 and make a request for translating the text.

Subsequently, the translation server 1650 may process the text in operation 1719. At this time, the intermediate processing unit 1656 of the translation processing unit 1655 may process the text by defining attributes of analysis units in the sentence of the text. The intermediate processing unit 1656 may analyze at least one of text before the summarization and summarized text and define attributes of the analysis units. The intermediate processing unit 1656 may process the text as illustrated, for example, in FIG. 8, 9, or 10.

Subsequently, the translation server 1650 may translate the text in operation 1721. At this time, the translation processing unit 1655 may convert the text from a current language to another language. Further, the translation processing unit 1655 may translate the text as illustrated, for example, in FIG. 11. Thereafter, the translation server 1650 may transmit the text to the electronic device 1630 in operation 1723. At this time, the translation processing unit 1655 may transmit the text to the electronic device 1630 through the communication unit 1651.

The electronic device 1630 may output the text in operation 1725. At this time, the controller 1639 may display the text by controlling the display unit 1643. The controller 1639 may output the text with another language.

An apparatus for processing text according to various example embodiments of the present disclosure may process text based on attributes of analysis units in text and then translate the text. Accordingly, the apparatus for processing the text can accurately translate the text. Further, the apparatus for processing the text can accurately translate the text even though the text is summarized.

Example embodiments of the present disclosure disclosed in the description and the drawings are merely examples provided for ease of explanation and understanding and to describe the technical matters of the present disclosure and aid in the understanding of the present disclosure, and do not limit the scope of the present disclosure. Therefore, it should be understood that all modifications or modified forms drawn by the present disclosure in addition to the example embodiments disclosed herein are included in the scope of the present disclosure.

## Claims

1. A method of processing text, the method comprising:
summarizing text by extracting at least one sentence from the text;
identifying attributes of analysis units included in the sentence of the summarized text; and
translating the summarized text based on the identified attributes.

2. The method of claim 1, wherein the identifying of the attributes comprises analyzing one or more of the text and the summarized text.

3. The method of claim 1, wherein the identifying of the attributes comprises detecting an entity name in the analysis units, and
wherein the translating of the processed text comprises translating the processed text using the detected entity name.

4. The method of claim 1, wherein the identifying of the attributes comprises:
detecting a category of the summarized text; and
identifying the attributes of the analysis units included in the sentence of the summarized text based on the category.

5. The method of claim 4, wherein the category is determined based on one or more of an Internet address of the text and a received input.

6. The method of claim 1, wherein the identifying of the attributes comprises editing the sentence based on the attributes of the analysis units included in the sentence of the summarized text, and
wherein the editing of the extracted sentence comprises:
deleting or replacing at least one of the analysis units included in the sentence of the summarized text; or
splitting the sentence of the summarized text.

7. The method of claim 1, wherein the translating of the summarized text comprises translating the summarized text using the identified attributes.

8. The method of claim 7, wherein the translating of the summarized text comprises determining a translation scheme of the analysis units based on the identified attributes.

9. An apparatus for processing text, the apparatus comprising:
a summarization processing unit configured to summarize text by extracting at least one sentence from the text;
an intermediate processing unit configured to identify attributes of analysis units included in the sentence of the summarized text; and
a translation processing unit configured to translate the summarized text based on the identified attributes.

10. The apparatus of claim 9, wherein the intermediate processing unit is configured to analyze one or more of the text and the summarized text.

11. The apparatus of claim 9, wherein the intermediate processing unit is configured to detect an entity name in the analysis units, and
wherein the translation processing unit is configured to translate the summarized text using the detected entity name.

12. The apparatus of claim 9, wherein the intermediate processing unit is configured to detect a category of the summarized text and to identify the attributes of the analysis units included in the sentence of the summarized text based on the category.

13. The apparatus of claim 12, wherein the category is determined based on one or more of an Internet address of the text and a received input.

14. The apparatus of claim 9, wherein the intermediate processing unit is configured to edit the sentence based on the attributes of the analysis units included in the sentence of the summarized text, and
wherein the intermediate processing unit is configured to delete or replace at least one of the analysis units included in the sentence of the summarized text or to split the sentence of the summarized text.

15. The apparatus of claim 9, wherein the translation processing unit is configured to translate the summarized text using the identified attributes, and
wherein the translation processing unit is configured to determine a translation scheme of the analysis units based on the identified attributes.
